(19) Europäisches Patentamt

European Patent Office

Office européen des brevets

(11) Veröffentlichungsnummer: **0 199 083**

**A2**

## (12) EUROPÄISCHE PATENTANMELDUNG

(21) Anmeldenummer: 86103663.0

(22) Anmeldetag: 18.03.86

(51) Int. Cl.⁴: **G06K 17/00**

(30) Priorität: **18.04.85 DE 3514062**

(43) Veröffentlichungstag der Anmeldung:
**29.10.86 Patentblatt 86/44**

(84) Benannte Vertragsstaaten:
**AT BE CH DE FR GB IT LI LU NL SE**

(71) Anmelder: **Nixdorf Computer
Aktiengesellschaft
Fürstenallee 7
D-4790 Paderborn(DE)**

(72) Erfinder: **Nölle, Jürgen
Heinrich-Lübke-Strasse 41
D-4790 Paderborn(DE)**
Erfinder: **Klemz, Wolf-Dieter
Hubertusstrasse 12
D-4795 Delbrück(DE)**
Erfinder: **Schmeykal, Rudolf
Ringstrasse 15
D-8551 Hemhofen(DE)**

(74) Vertreter: **Patentanwälte Schaumburg &
Thoenes
Mauerkircherstrasse 31 Postfach 86 07 48
D-8000 München 80(DE)**

(54) **Wertscheingeber.**

(57) Bei einem Wertscheingeber, umfassend eine Mehrzahl von Speichereinheiten mit jeweils einem Behälter (20) zur Aufnahme eines Stapels von Wertscheinen und einer dem jeweiligen Behälter (20) fest zugeordneten Abzugs-und Vereinzelungsvorrichtung (22) und eine allen Speichereinheiten gemeinsame Sammeltransportbahn (14), die von den Speichereinheiten zu einer diesen gemeinsamen Ausgabestation führt, ist zur Automatisierung der Ausgabe von Schecks oder dergleichen einer der Speichereinheiten (16) eine Druckstation (36) zum Bedrucken von Wertscheinen zugeordnet, die im Transportweg einer die Abzugs-und Vereinzelungsvorrichtung (22) mit der Sammeltransportbahn (14) verbindenden Einzeltransportbahn angeordnet ist.

FIG. 1

Wertscheingeber

Die Erfindung betrifft einen Wertscheingeber, umfassend eine Mehrzahl von in einem Gestell angeordneten Speichereinheiten mit jeweils einem Behälter zur Aufnahme eines Stapels von Wertscheinen oder dergleichen und einer dem jeweiligen Behälter fest zugeordneten Abzugs-und Vereinzelungsvorrichtung, und eine allen Speichereinheiten gemeinsame Sammeltransportbahn, die von den Speichereinheiten zu einer diesen gemeinsamen Ausgabestation führt.

Wenn ein Kunde von seiner Bank Scheckformulare erhalten möchte, nimmt ein Bankangestellter ein Bündel durchnummerierter Scheckvordrucke, stellt an einer Druckvorrichtung die Kontonummer und gegebenenfalls andere persönliche Daten des Kontoinhabers ein und bedruckt dann nacheinander die Scheckvordrucke, indem er die Druckvorrichtung entsprechend oft von Hand betätigt. Dies nimmt relativ viel Zeit in Anspruch und führt insbesondere in Zeiten großen Kundenandrangs dazu, daß sich die Kunden vor den Schaltern stauen. Aus Sicherheitsgründen ist weder die kundenspezifische Vorcodierung der Scheckformulare noch die Ausgabe einer großen Anzahl von Scheckformularen an den Kunden zweckmäßig, insbesondere wenn es sich um die Ausgabe von Barschecks wie beispielsweise Euroschecks handelt.

Der Erfindung liegt die Aufgabe zugrunde, die Scheckausgabe unter Beachtung der erforderlichen Sicherheitsbestimmungen zu vereinfachen und zu beschleunigen.

Diese Aufgabe wird erfindungsgemäß mit einem Wertscheingeber der eingangs genannten Art dadurch gelöst, daß mindestens einer der Speichereinheiten eine Druckstation zum Bedrucken der Wertscheine zugeordnet ist, die im Transportweg einer die Abzugs-und Vereinzelungsvorrichtung mit der Sammeltransportbahn verbindenden Einzeltransportbahn angeordnet ist und einen Druckkopf sowie ein Druckgegenlager zur Abstützung und eine Positionierungseinrichtung zum Ausrichten eines zu bedruckenden Wertscheines während des Druckvorganges umfaßt.

Die Erfindung beruht auf der Erkenntnis, daß Scheckformulare nicht nur den gleichen Sicherheitsbestimmungen unterworfen sind wie Bargeld, sondern daß sie sich auch in der gleichen Weise wie Banknoten in Geldausgabeautomaten handhaben lassen, so daß alle an Geldausgabeautomaten an sich bekannten Einrichtungen auch für die Ausgabe von Scheckformularen verwendet werden können. Ebenso wie bei der Ausgabe von Banknoten muß die die Wertscheine anfordernde Person sich durch eine Identitätskarte oder durch ein Paßwort identifizieren, bevor nach Eingabe der Kontonummer und eventuell weiterer personenbezogener Angaben die Entnahme der Scheckformulare aus dem Speicherbehälter, das Bedrucken der Scheckformulare und die Ausgabe derselben in dem Ausgabefach veranlaßt werden kann. Hierzu kann dasselbe Bedienungsfeld und dieselbe Datenverarbeitungseinheit verwendet werden, wie für die Ausgabe von Banknoten. Insbesondere befindet sich die Speichereinheit für die Scheckvordrucke in demselben Tresor wie die übrigen Banknoten des Wertscheingebers, so daß für die Scheckvordrucke kein eigener Tresor erforderlich ist, der die Kosten für eine derartige automatishe Ausgebeeinheit erheblich erhöhen würde.

Die Anordnung der Druckstation und des Druckkopfes relativ zu dem die zu bedruckenden Wertscheine enthaltenden Behälter richtet sich nach den räumlichen Gegebenheiten innerhalb des Wertscheingebers und insbesondere auch nach der Art der Entnahme der Wertscheine aus dem Behälter. Wird der Scheckvordruck aus dem Behälter derart entnommen, daß er mit der zu bedruckenden Zeile quer zur Transportrichtung ausgerichtet ist, so wird es zweckmäßig sein, den Scheckvordruck während des Druckvorganges stationär zu halten, wobei der Druckkopf parallel zur Druckrichtung und senkrecht zur Transportrichtung der Einzeltransportbahn verstellbar ist. Dies gilt sowohl für eine Ausführungsform bei welcher die Einzeltransportbahn durch die Druckstation hindurchführt, wobei der Wertschein nach dem Bedrucken in der gleichen Richtung weiterläuft wie beim Einlaufen in die Druckstation, als auch für eine Ausführungsform, bei der der zu bedruckende Wertschein durch einen die Abzugs-und Vereinzelungsvorrichtung mit der Druckstation verbindenden ersten Abschnitt der Einzeltransportbahn in die Druckstation einführbar und durch eine die Druckstation mit der Sammeltransportbahn verbindenden zweiten Abschnitt der Einzeltransportbahn entgegengesetzt zur Einführrichtung aus der Druckstation herausführbar ist. In beiden Fällen wird der Wertschein in der Druckstation zweckmäßigerweise durch eine quer zur Transportrichtung gerichtete Anschlagleiste relativ zum Druckkopf positioniert, wobei im ersten Fall die Anschlagleiste senkrecht zur Transportebene verstellbar ist, um einen Weitertransport des Wertscheines nach dem Druckvorgang zu ermöglichen. Die Anschlagleiste kann dabei auch in Druckrichtung um Druckzeilenabständen entsprechende Schritte verstellbar sein, um das positionsgerechte Aufdrücken mehrerer Druckzeilen auf dem Scheckformular zu ermöglichen. In der gleichen Weise ist es jedoch auch möglich, den Druckkopf relativ zu dem stationär bleibenden Wertschein zu verstellen. In allen Fällen ist es zweckmäßig, wenn die Positionierungseinrichtung eine parallel zur Transportrichtung der Wertscheine gerichtete Anschlagleiste und Positionierungsrollen mit schräg in Richtung auf die Anschlagleiste gerichteter Vorschubrichtung aufweist, um den Druckzeilenanfang exakt festzulegen. Dies ist im Hinblick auf eine maschinelle Lesbarkeit der Scheckformulare wesentlich.

Wird das Scheckformular aus dem Behälter in der Weise entnommen, daß die zu bedruckende Zeile parallel zur Transportrichtung gerichtet ist, so besteht die Möglichkeit, den Druckkopf starr an der Einzeltransportbahn anzuordnen und die Transportgeschwindigkeit mit der Druckgeschwindigkeit so zu synchronisieren, daß das Scheckformular beim Durchlaufen der Druckstation ohne Anhalten bedruckt werden kann.

Um die bereits vorhandene Codierung auf den Scheckformularen und die in der Druckstation aufgedruckten Zeichen kontrollieren zu können, umfaßt die Druckstation zweckmäßigerweise eine Leseeinrichtung, mit deren Hilfe die auf dem Scheckformular enthaltenen Daten überprüft und gegebenenfalls fehlerhafte Scheckformulare in einem der Speichereinheit zugeordneten Sammelfach abgelegt werden, um zu vermeiden, daß fehlerhaft bedruckte Scheckformulare dem Kunden ausgehändigt werden.

Mit der erfindungsgemäßen Ausgestaltung des Wertscheingebers kann die Scheckausgabe mit einem relativ geringen zusätzlichen Aufwand ebenfalls automatisiert und damit für den Selbstbedienungsbetrieb zugänglich gemacht werden.

Anstelle der Ausgabe von Scheckformularen können mit der gleichen Einrichtung auch beispielsweise Kontoauszüge oder andere banktypische Belege ausgegeben werden.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:

Fig. 1 bis 3 drei verschiedene Ausführungsformen der Erfindung jeweils in einem schematischen vertikalen Teilschnitt durch das untere Ende eines Wertscheingebers mit mehreren vertikal übereinander angeordneten Speichereinheiten und

Fig. 4 einen schematischen Horizontalschnitt durch den Wertscheingeber oberhalb der die zu bedruckenden Wertscheine enthaltenden Speichereinheit.

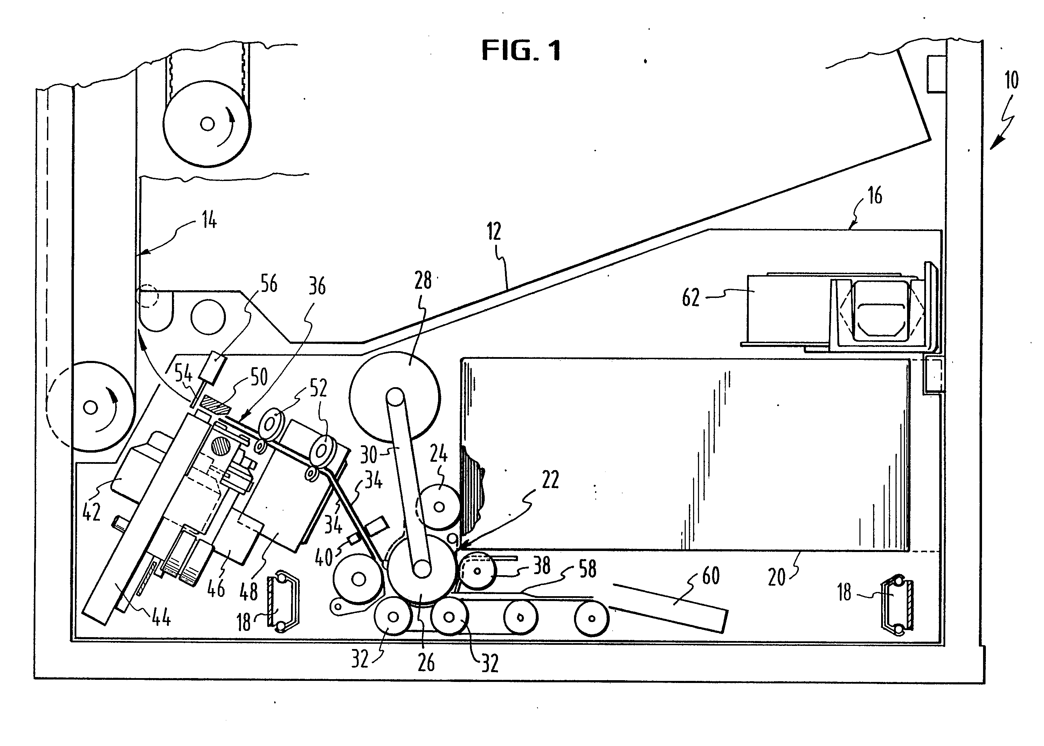

Die erfindungsgemäße Speichereinheit zur Aufnahme von Scheckformularen ist in einem Wertscheingeber angeordnet, wie er beispielsweise in dem deutschen Patent 27 17 345 beschrieben ist. Von der dort beschriebenen Anordnung sind in Fig. 1 ein Gerätegestell 10, der untere Rand einer von mehreren vertikal übereinander angeordneten Speichereinheiten 12 zur Aufnahme von Banknoten und eine sämtlichen Speichereinheiten zugeordnete Sammeltransportbahn 14 angedeutet. Bezüglich der Einzelheiten der Teile 10 bis 14 wird auf die Beschreibung des deutschen Patentes 27 17 345 verwiesen.

Zusätzlich zu den in dem Wertscheingeber gemäß dem deutschen Patent 27 17 345 angeordneten Speichereinheiten oder anstelle der untersten Speichereinheit des Wert scheingebers ist in dem Gestell 10 ein allgemein mit 16 bezeichneter Einschub angeordnet, der auf in Blickrichtung verlaufenden Teleskopschienen 18 in das Gestell 10 hinein-bzw. aus demselben herausschiebbar ist. Der Einschub 16 umfaßt eine getrennt einsetzbare und herausnehmbare Kassette 20 zur Aufnahme von Scheckvordrucken, die in einem Stapel im wesentlichen senkrecht auf dem Kassettenboden aufstehen. Der Kassette 20 ist eine Abzugs-und Vereinzelungsvorrichtung 22 zugeordnet, wie sie beispielsweise ebenfalls in der deutschen Patentschrift 27 17 345 beschrieben ist. Die Abzugs-und Vereinzelungsvorrichtung 22 umfaßt Abzugsrollen 24, die unmittelbar an dem in dem Speicherbehälter 20 angeordneten Wertscheinstapel anliegen. Bei Drehung schieben die Abzugsrollen 24 jeweils den obersten Wertschein des Stapels in Richtung auf eine Transportrolle 26, die von einem Antriebsmotor 28 über einen Antriebsriemen 30 angetrieben wird und mit zwei Gegendruckrollen 32 zusammenwirkt, um den aus der Kassette 20 entnommenen Wertschein zwischen zwei Leitblechen 34 in Richtung auf eine allgemein mit 36 bezeichnete Druckstation zu befördern. Entgegen der Förderrichtung langsam rotierende Gegenlaufrollen 38 halten einen beim Abzug des obersten Wertscheines eventuell mitgezogenen zweiten Schein zurück, so daß mit Sicherheit nur ein Wertschein in die Druckstation 36 gelangen kann. Dies wird zusätzlich noch durch eine Abtasteinrichtung 40 überprüft, die in Förderrichtung unmittelbar hinter der Abzugs-und Vereinzelungsvorrichtung 22 angeordnet ist und in der mechanisch oder optisch die Dicke des durchlaufenden Materials überprüft wird. Bezüglich näherer Einzelheiten der Abzugs- und Vereinzelungsvorrichtung 22 wird auf die DE-PS 27 17 345 verwiesen.

Die Druckstation 36 umfaßt einen Druckkopf 42 mit Farbbandkassette 44, der auf einem in Blickrichtung, d.h. senkrecht zur Zeichenebene gerichteten Träger 46 mittels eines Motors 48 hin und her bewegbar ist. Dem Druckkopf 42, beispielsweise einem Nadeldruckkopf ist ein leistenförmiges Druckgegenlager 50 zugeordnet, an dem der zu bedruckende Wertschein während des Druckvorganges in dem Bereich der zu druckenden Zeile anliegt. Schräg zur Transportrichtung des zu bedruckenden Wertscheines gerichtete Positionierungsrollen 52 schieben den zu bedruckenden Wertschein gegen eine nicht dargestellte parallel zur Transportrichtung verlaufende Anschlagleiste, um den zu bedruckenden Wertschein in Richtung der Druckzeile relativ zum Druckkopf genau zu positionieren und damit den Zeilenanfang festzulegen. Die Höhe der Druckzeile auf dem Wertschein wird durch einen quer zur Transportrichtung verlaufenden schematisch dargestellten Anschlag 54 gewährleistet, der mittels eines Anschlagantriebes 56 senkrecht zur Transportrichtung verstellbar ist und damit nach Abschluß des Druckvorganges den Weg für den Wertschein von der Druckstation 36 zur Sammeltransportbahn 14 freigibt.

Die Druckstation 36 umfaßt ferner eine nicht dargestellte Leseeinrichtung, welche sicherheitsrelevante Teile der Beschriftung auf den Wertscheinen vor dem Druckvorgang und die von dem Druckkopf 42 aufgedruckten Daten überprüft. Sollten sich beim Vergleich dieser Daten mit gespeicherten Soll-Werten Unstimmigkeiten ergeben, so können die fehlerhaft bedruckten Wertscheine durch eine Richtungsumkehr des Wertscheintransportes aus der Druckstation 36 über die Transportrollen 26 und 32 und eine Weiche 58 zu einem unterhalb der Kassette 20 angeordneten Sammelfach 60 für zurückgewiesene Scheine transpor tiert werden.

Die Steuerung des Druckkopfes 42, beispielsweise der Zeilentransport, das Anfahren der Druckposition und das Drucken erfolgt durch eine elektronische Schaltungsanordnung 62 die oberhalb der Kassette 20 in dem Einschub 16 angeordnet ist und zusätzlich zu den an sich bekannten vorstehend genannten Funktionen das Überwachen des Inhaltes der Kassette 20, das Abziehen und Vereinzeln der Formulare aus der Kassette 20, die Bewegung des Anschlags 54 und das Positionieren der Leseeinrichtung steuert. Die elektronische Schaltungsanordnung 62 ist im übrigen mit einer Datenverarbeitungseinrichtung verbunden, welche den üblichen Betrieb des Wertscheingebers steuert.

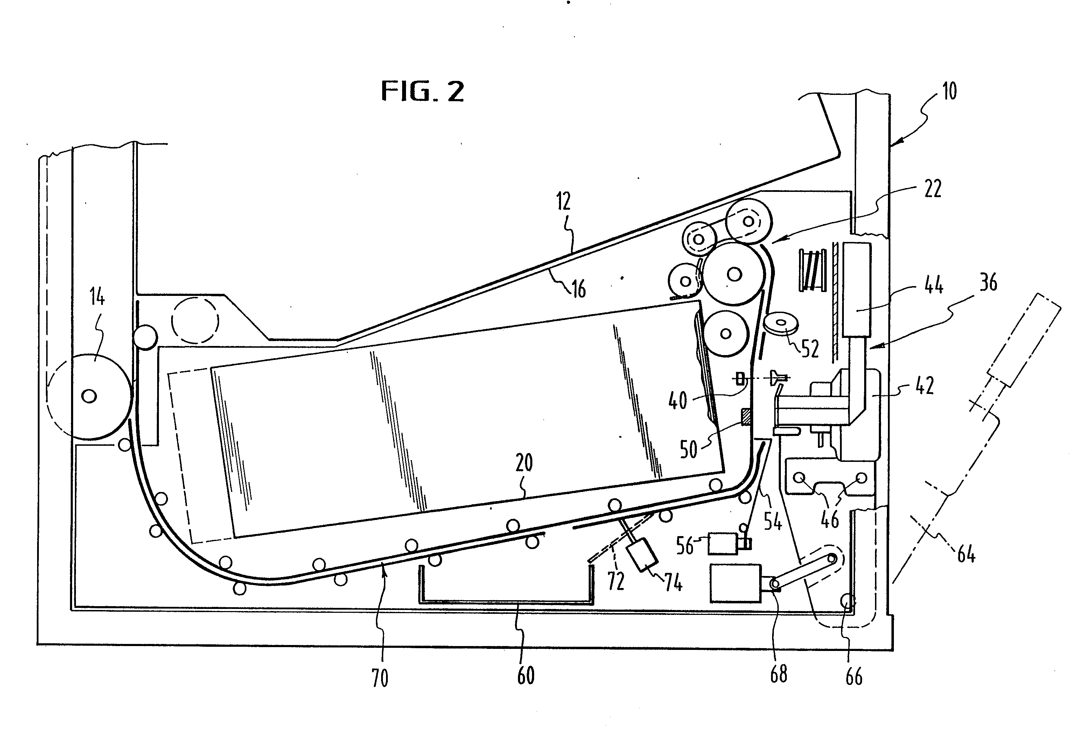

Bei der in der Fig. 2 dargestellten Ausführungsform sind gleiche Teile wieder mit gleichen Bezugszeichen versehen. Die in der Fig. 2 dargestellte Ausführungsform unterscheidet sich von der in der Fig. 1 dargestellten Ausführungsform vor allem dadurch, daß die Kassette 20 mit der Abzugs-und Vereinzelungsvorrichtung 22 um 180° um die Hochachse gedreht ist und daß die Druckstation 36 ebenfalls auf der der Sammeltransportbahn 14 abgewandten Seite der Kassette 20 angeordnet ist. Der Abzug der Formulare aus der Kassette 20 erfolgt nicht wie bei der Ausführungsform in Fig. 1 nach unten, sondern nach oben. Der Druckkopf 42 ist zusammen mit der Farbbandkassette 44 auf einem Träger 64 gelagert, der um eine senkrecht zur Bildebene gerichtete Achse 66 mittels eines Schwenkantriebes 68 in die durch strichpunktierte Linien wiedergegebene Stellung verstellbar ist. Dies hat den Vorteil, daß der Druckkopf und die Farbbandkassette für Wartungsmaßnahmen leicht zugänglich sind. Das Aufnahmefach 60 für fehlerhaft bedruckte Scheckformulare ist unterhalb der mit 70 bezeichneten Einzeltransportbahn angeordnet. Die fehlerhaft bedruckten Scheckformulare können durch das einfache Umstellen einer Weiche 72 mittels eines Weichenantriebes 74 in dem Aufnahmefach 60 abgelegt werden, ohne daß hierzu ein reversierbarer Antrieb für die Einzeltransportbahn 70 vorgesehen sein muß, wie dies bei der Ausführungsform gemäß Fig. 1 erforderlich ist.

Aufgrund der schrägen Anordnung der über dem Einschub 16 angeordneten Speichereinheiten für die Banknoten ergibt sich bei der Ausführungsform gemäß Fig. 2 auf der der Sammeltransportbahn 14 fernen Seite des Gestelles 10 mehr Raum für die Anordnung der Abzugs-und Vereinzelungsvorrichtung 22 und der Druckstation 36. Dadurch besteht die Möglichkeit, bei der Ausführungsform gemäß Fig. 2 auch eine längere Kassette 20 für einen größeren Formularvorrat in dem Einschub 16 unterzubringen.

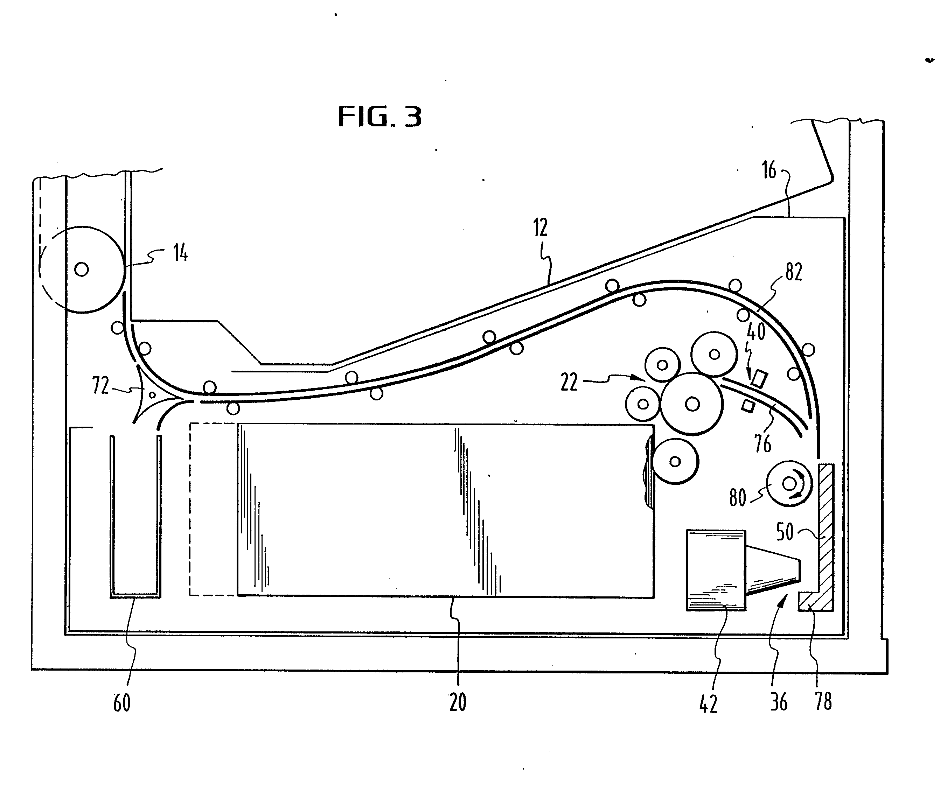

Auch bei der Ausführungsform gemäß Fig. 3 sind wieder Teile mit gleicher Funktion mit den gleichen Bezugszeichen versehen. Ähnlich wie bei der Ausführungsform gemäß Fig. 2 sind auch bei dieser Ausführungsform die Abzugs-und Vereinzelungsvorrichtung 22 sowie die Druckstation 36 auf der Sammeltransportbahn 14 abgewandten Gestellseite angeordnet. Im Gegensatz zu der Ausführungsform gemäß den Fig. 1 und 2 werden bei der Ausführungsform gemäß Fig. 3 die zu bedruckenden Wertscheine nicht durch die Druckstation 36 hindurch transportiert. Sie laufen vielmehr von der Abzugs-und Vereinzelungsvorrichtung 22 über einen ersten Transportbahnabschnitt 76 gegen einen stationären Anschlag 78 in der Druckstation 36 und werden nach dem Bedrucken durch den Druckkopf 42 mittels eines reversierbaren Transportantriebes 80 entgegengesetzt zur Einlaufrichtung wieder aus der Druckstation 36 herausgeschoben und einen oberhalb der Kassette 20 verlaufenden zweiten Transportbahnabschnitt 82 zugeführt, in dem sie dann der Sammeltransportbahn 14 zugeführt werden. Fehlerhafte Scheckformulare werden über die Weiche 72 in das unterhalb der Sammeltransportbahn 14 angeordnete Fach 60 gelenkt.

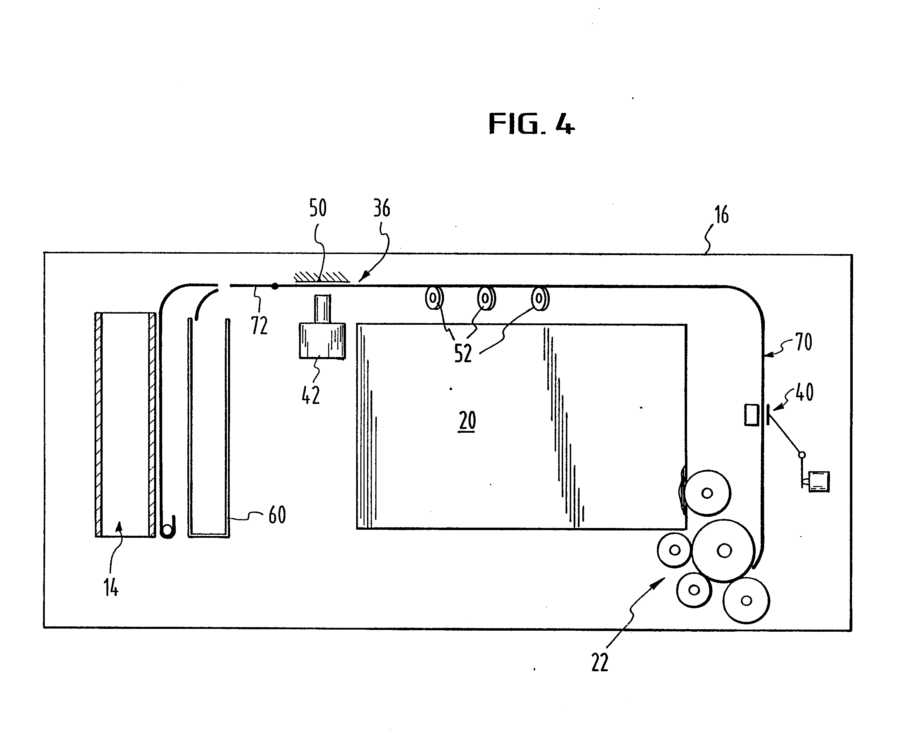

Bei der Ausführungsform gemäß der Fig. 4 erfolgt im Gegensatz zu den Ausführungsformen gemäß den Fig. 1 bis 3 der Abzug der Formulare aus der Kassette 20 mittels der Abzugs-und Vereinzelungsvorrichtung 22 nicht nach oben oder unten, sondern zur Seite heraus, so daß die Scheckformulare in Richtung der aufzudruckenden Druckzeilen auf der Einzeltransportbahn 70 transportiert werden. Die Ausrichtung gegen eine nicht dargestellte parallel zur Transportbahn verlaufende Anschlagkante erfolgt wiederum durch Positionierungsrollen 52. Der Druckkopf 42 ist in der Druckstation 36 fest angeordnet. Die Transportgeschwindigkeit der Einzeltransportbahn 70 ist mit der Druckgeschwindigkeit des Druckkopfes 42 derart synchronisiert, daß die Formulare beim Durchlauf durch die Druckstation 36 ohne Anhalten bedruckt werden. Aus der Druckstation 36 laufen die bedruckten Formulare direkt zur Sammeltransportbahn 14 oder können bei festgestellten Fehlern über die Weiche 72 in dem neben der Sammeltransportbahn 14 dargestellten Fach 60 abgelegt werden. Diese Anordnung hat gegenüber den vorher beschriebenen Ausführungsformen den Vorteil, daß nicht der Druckkopf sondern nur das zu bedruckende Formular bewegt zu werden braucht. Dadurch vereinfacht sich der Aufbau der Druckeinrichtung und der elektronischen Schaltungsanordnung zur Steuerung derselben. Allerdings kann in diesem Fall auch nur eine Druckzeile auf dem Formular aufgebracht werden.

**Ansprüche**

1. Wertscheingeber, umfassend eine Mehrzahl von in einem Gestell angeordneten Speichereinheiten mit jeweils einem Behälter zur Aufnahme eines Stapels von Wertscheinen oder dergleichen und einer dem jeweiligen Behälter fest zugeordneten Abzugs-und Vereinzelungsvorrichtung und eine allen Speichereinheiten gemeinsame Sammeltransportbahn, die von den Speichereinheiten zu einer diesen gemeinsamen Ausgabestation führt, dadurch **gekennzeichnet,** daß mindestens einer der Speichereinheiten (16) eine Druckstation (36) zum Bedrucken der Wertscheine zugeordnet ist, die mit dem Transportweg einer die Abzugs-und Vereinzelungsvorrichtung (22) mit der Sammeltransportbahn (14) verbindenden Einzeltransportbahn (70) verbunden ist und einen Druckkopf (42) sowie ein Druckgegenlager (50) zur Abstützung und eine Positionierungseinrichtung (52) zum Ausrichten eines zu bedruckenden Wertscheines während des Druckvorganges umfaßt.

2. Wertscheingeber nach Anspruch 1, dadurch **gekennzeichnet,** daß die Positionierungseinrichtung eine parallel zur Transportrichtung der Wertscheine gerichtete Anschlagleiste und Positionierungsrollen (52) mit schräg in Richtung auf die Anschlagleiste gerichteter Vorschubrichtung aufweist.

3. Wertscheingeber nach Anspruch 1 oder 2, dadurch **gekennzeichnet,** daß der Druckkopf (42) parallel zur Druckrichtung und senkrecht zur Transportrichtung der Einzeltransportbahn (70) verstellbar ist.

4. Wertscheingeber nach einem der Ansprüche 1 bis 3, dadurch **gekennzeichnet,** daß die Einzeltransportbahn (70) durch die Druckstation (36) hindurchführt und daß die Positionierungseinrichtung eine senkrecht zur Transportrichtung gerichtete zweite Anschlagleiste (54) aufweist, die senkrecht zur Transportebene verstellbar ist.

5. Wertscheingeber nach einem der Ansprüche 1 bis 4, dadurch **gekennzeichnet,** daß die zu bedruckenden den Wertscheine durch einen die Abzugs-und Vereinzelungsvorrichtung (22) mit der Druckstation (36) verbindenden ersten Abschnitt (76) der Einzeltransportbahn in die Druckstation einführbar und durch einen die Druckstation (36) mit der Sammeltransportbahn (14) verbindenden zweiten Abschnitt (82) der Einzeltransportbahn entgegengesetzt zur Einführrichtung aus der Druckstation (36) herausführbar ist.

6. Wertscheingeber nach Anspruch 1 oder 2, dadurch **gekennzeichnet,** daß der Druckkopf (42) stationär mit parallel zur Transportrichtung der Einzeltransportbahn (70) gerichteter Druckrichtung angeordnet ist und daß die Wertscheine in der Einzeltransportbahn (70) synchron zur Druckgeschwindigkeit transportierbar sind.

7. Wertscheingeber nach einem der Ansprüche 1 bis 6, dadurch **gekennzeichnet,** daß die Druckstation (36) auf der der Sammeltransportbahn (14) abgewandten Seite der Speichereinheit (16) angeordnet ist.

8. Wertscheingeber nach Anspruch 7, dadurch **gekennzeichnet,** daß der Druckkopf (42) auf einem aus dem Gestell (10) herausschwenkbaren Träger (64) angeordnet ist.

9. Wertscheingeber nach einem der Ansprüche 1 bis 8, dadurch **gekennzeichnet,** daß die Druckstation (36) eine Leseeinrichtung zur Kontrolle der Druckzeichen auf dem Wertschein und/oder zum Lesen von anderweitig auf dem Wertschein aufgedruckten Daten umfaßt und daß die Speichereinheit (16) ein Aufnahmefach (60) für bei der Kontrolle zurückgewiesene Wertscheine aufweist, das mit der Druckstation (36) oder der Einzeltransportbahn (70) durch eine in Abhängigkeit von der Leseeinrichtung steuerbare Weiche (58; 72) und/oder Transportbahn verbunden ist.

# FIG. 1

10

14

12

16

62

56 36 28

54 50 52

30 24

42 34 22

34

40 38 58 60 20

46 48 18 18

44

32 26 32

0 199 083

# FIG. 2

0 199 083

FIG. 3

FIG. 4